# EUROPÄISCHE PATENTSCHRIFT

(11) **EP 2 774 744 B1**
(45) Veröffentlichungstag und Bekanntmachung des Hinweises auf die Patenterteilung: **10.06.2015**
(21) Anmeldenummer: 14152457.9
(22) Anmeldetag: 24.01.2014
(51) Int. Cl.: B29C 63/00, B27D 5/00, B32B 7/12, B32B 27/00

(54) **Kantenleiste**
Edge strip
Baguette de bordure

(30) Priorität: 06.03.2013 DE 102013102227
(43) Veröffentlichungstag der Anmeldung: 10.09.2014
(73) Patentinhaber: W. Döllken & Co. GmbH, 45964 Gladbeck (DE)
(72) Erfinder:
(74) Vertreter: von dem Borne, Andreas

(56) Entgegenhaltungen:
- EP-B1- 1 163 864
- DE-A1-102006 060 269
- DE-U1- 29 819 350

## Beschreibung

Die Erfindung betrifft eine Kantenleiste für die Schmalflächenbeschichtung von plattenförmigen Werkstücken, insbesondere von Möbelplatten, mit zumindest einer frontseitigen Deckschicht und einer Schmelzschicht, welche zum Befestigen der Kantenleiste an dem Werkstück aufschmelzbar ist. Solche Kantenleisten bzw. Deckleisten werden auch einfach als Kanten oder Kantenbänder oder auch als Umleimer bezeichnet. Bei den plattenförmigen Werkstücken bzw. Möbelplatten kann es sich insbesondere um Holzwerkstoffplatten, z. B. Spanplatten, Faserplatten oder dergleichen handeln. Diese können einseitig oder beidseitig mit Beschichtungen, z. B. aus harzgetränkten Papieren versehen sein. Es werden aber auch Platten aus anderen Werkstoffen sowie Verbundplatten umfasst.

Es ist grundsätzlich bekannt, zur Befestigung derartiger Kantenleisten auf beispielsweise Schmalseiten von Möbelplatten einen Schmelzklebstoff im Zuge der Befestigung bzw. unmittelbar vor der Befestigung auf die Deckleiste aufzutragen. Die Befestigung erfolgt in sogenannten Kantenbandanleimmaschinen. Bei einer solchen Befestigung der Deckleisten auf den Schmalseiten von Möbelplatten besteht ein ständiges Problem darin, dass eine sichtbare Fuge zwischen den Deckleisten und den Möbelplatten bzw. ihren Schmalseiten entstehen kann. Diese Fuge resultiert im Wesentlichen aus der Schmelzklebstoffschicht.

Um den optischen Eindruck solcher verklebten Deckleisten zu verbessern, wurde vorgeschlagen, einen eingefärbten Klebstoff zu verwenden, welcher gleichfarbig mit beispielsweise den Deckleisten sein kann. Problematisch ist in diesem Zusammenhang, dass Deckleisten in der Praxis einer Vielzahl unterschiedlichster Farben bzw. Dekorationen angeboten werden, so dass sich bei der Befestigung solcher Deckleisten an beispielsweise Möbelplatten das Problem ergibt, dass dann bei der Befestigung vor Ort jeweils ein geeigneter Schmelzklebstoff zur Verfügung stehen muss.

Zu Vermeidung der beschriebenen unansehnlichen Schmelzklebstofffugen, welche insbesondere bei Benutzung bzw. Reinigung deutlich sichtbar werden, wurde außerdem vorgeschlagen, vollständig auf einen Schmelzklebstoff zur Befestigung der Deckleisten an der Möbelplatte zu verzichten. Aus der EP 1 163 864 B1 ist daher eine klebstofffreie Verbindung zwischen einer Deckleiste bzw. Kunststoffkante und einer Möbelplatte bekannt, d. h. die Kunststoffkante wird unmittelbar und ohne Kleber auf die Möbelplatte gefügt. Dazu wird die Oberfläche der Kunststoffkante durch Laserstrahlung aufgeschmolzen, so dass eine Laserschweißverbindung einer kleberfreien Kunststoffplatte mit der Möbelplatte erfolgt.

Alternativ wird in der EP 1 852 242 A1 vorgeschlagen, eine Deckleiste mit einer einseitig auf die Deckleiste aufgebrachten Schmelzklebstoffschicht zu verwenden, wobei die Deckleiste mit der Schmelzklebstoffschicht im Wege der Coextrusion hergestellt ist. Dabei ist die Schmelzklebstoffschicht bevorzugt in der Farbe der Deckleiste eingefärbt, so dass sich die Deckleiste an einer Möbelplatte befestigen lässt, ohne dass eine sichtbare Klebstofffuge erkennbar ist. Der Schmelzklebstoff bzw. die Schmelzklebstoffschicht ist dabei mittels Laserstrahlung aufschmelzbar bzw. aktivierbar.

In der WO 2009/26977 A1 wird für die Verarbeitung einer Kantenleiste mittels Laserstrahlung vorgeschlagen, eine Kantenleiste mit einer Schmelzschicht zu verwenden, welche sowohl polare als auch unpolare Anteile im Molekühlaufbau enthält.

Schließlich beschreibt die EP 2 366 540 A1 eine Kantenleiste aus thermoplastischem Kunststoffmaterial in mehrschichtiger Struktur, insbesondere für Möbelplatten, welche dadurch gekennzeichnet ist, dass diese über eine im Schmelzzustand hoch fließfähige Schmelzschicht verfügt, die eine vergleichbare Härte und Schmelztemperatur zumindest einer weiteren Schicht besitzt, so dass insgesamt die Kantenleiste eine konstante Härte und Schmelztemperatur aufweisen soll. Optional soll die Schmelzschicht mit einem Haftvermittler beschichtet sein. Eine solche Haftvermittlerschicht soll keine signifikanten oder negativen Einflüsse auf das Fügeverhalten der Schmelzschicht durch Aufschmelzen mittels Energiezufuhr ausüben. Somit soll sich der Vorteil ergeben, dass der Verarbeiter der Kantenleiste diese sowohl herkömmlich mittels Schmelzklebstoffen als auch mittels Energiezufuhr durch Laserstrahlung oder Plasma an Möbelplatten befestigen kann. Hierdurch soll für den Verarbeiter die Notwendigkeit einer doppelten Lagerhaltung an Kantenleisten für beide Verfahren entfallen.

Insgesamt besteht folglich das Bedürfnis, Kantenleisten für die Schmalflächenbeschichtung von plattenförmigen Werkstücke, insbesondere von Möbelplatten, zur Verfügung zu stellen, welche mit einer Schmelzschicht bzw. Funktionalschicht versehen sind, die mittels geeigneter Quellen, z. B. mittels Laserstrahlung, Plasmastrahlung oder auch Heißluft aufgeschmolzen und mittels Andruck dauerhaft auf die Möbelplatte aufgebracht werden kann. Erste Ausführungsformen haben sich in der Praxis etabliert. Die bekannten Leisten sind jedoch weiterentwicklungsfähig. So können in der Praxis insbesondere Probleme durch Feuchtigkeit entstehen, welche im Bereich der Fuge eindringen kann. - Hier setzt die Erfindung ein.

Der Erfindung liegt die Aufgabe zugrunde, eine Kantenleiste für die Schmalflächenbeschichtung von plattenförmigen Werkstücken, insbesondere von Möbelplatten, der eingangs beschriebenen Art zu schaffen, welche sich bei verbesserter Wasserfestigkeit einwandfrei verarbeiten bzw. befestigen lässt.

Zur Lösung dieser Aufgabe lehrt die Erfindung bei einer gattungsgemäßen Kantenleiste der Eingangs beschriebenen Art, dass auf der der Deckschicht abgewandten Rückseite der Schmelzschicht eine Hydrophobierungsschicht aus bzw. mit einem Hydrophobierungsmittel angeordnet ist.

Die Erfindung geht dabei von der Erkenntnis aus, dass sich die Wasser-Fugendichtigkeit im Bereich von Schmalflächenbeschichtungen signifikant verbessern lässt, wenn die Schmelzschicht einer solchen Kantenleiste mit einer Hydrophobierungsschicht aus einem Hydrophobierungsmittel beschichtet wird. Im Zuge der Verarbeitung der Kantenleiste wird lediglich die (innenliegende) Schmelzschicht aufgeschmolzen und unter Zwischenschaltung der Hydrophobierungsschicht gegen die zu beschichtende Schmalfläche der Möbelplatte gedrückt. Dabei wird die Hydrophobierungsschicht in das Werkstück, z. B. in die Spanplatte oder Faserplatte gepresst, so dass die Wasser- und Wasserdampfbeständigkeit erhöht wird. Überraschenderweise kann eine Verklebung der Kante mit Hilfe der Schmelzschicht einwandfrei erfolgen, obwohl die Rückseite der Kante und folglich die rückseitige Oberfläche nicht von der Schmelzschicht, sondern von der zusätzlichen Hydrophobierungsschicht gebildet wird. Insbesondere besteht die Möglichkeit, lediglich die Schmelzschicht mit einer Wärme- und/oder Strahlungsquelle aufzuschmelzen, ohne dass die Hydrophobierungsschicht beeinflusst wird. Da die Hydrophobierungsschicht im Zuge des Verpressens von der Schmelzschicht in den Bereich der Holzwerkstoffplatte, z. B. an offene Stellen der Holzwerkstoffplatte und deren Deckschichten gepresst wird, erfolgt trotz der Hydrophobierungsschicht eine einwandfreie Verklebung, und zwar insbesondere auch im Bereich der Beschichtungen einer solchen Möbelplatte, die in der Praxis z. B. aus Harz getränkten Papieren, z. B. phenolharzgetränkten Papieren bestehen. Insbesondere im Bereich solcher Beschichtungen, z. B. Papiere bestand bislang das Problem, dass selbst bei geringen Beschädigungen Feuchtigkeit eindringen und die Platte quillen kann. Dieses wird durch die erfindungsgemäße Hydrophobierung auf einfache und kostengünstige Weise zuverlässig vermieden.

Für die Hydrophobierungsschicht können grundsätzlich bekannte Hydrophobierungsmittel verwendet werden, z. B. Polysiloxane, Silane und/oder Isoalkane bzw. Hydrophobierungsmittel auf Basis von Polysiloxanen, Silanen und/oder Isoalkanen.

Es kann sich z. B. um ein modifiziertes bzw. funktionelles (z. B. aminofunktionelles) Polysiloxan bzw. eine Emulsion eines solchen Polysiloxans, z. B. in Wasser, handeln. Dabei kann grundsätzlich auf bekannte Hydrophobierungsmittel zurückgegriffen werden, z. B. ein Hydrophobierungsmittel auf Siloxan- bzw. Silan-Basis gemäß DE 10 2007 045 186 A1. Es kann sich z. B. um Alkoxytriethoxysilan handeln, welches (im Wesentlichen) vollständig hydrolysiert und partiell vorkondensiert ist. Die Alkoxy-Gruppe ist in diesem Fall für den hydrophoben Charakter zuständig. Dabei kann es sich um aliphatischen Kohlenwasserstoff, Fluorkohlenwasserstoff oder andere Verbindungen handeln. Im Rahmen der Erfindung lässt sich aber auch auf Hydrophobierungsmittel ohne organische Modifizierung zurückgreifen, z. B. TEOS (Tetraethoxysilan)). Alternativ können jedoch auch Hydrophobierungsmittel aus Isoalkanen bzw. auf Basis von Isoalkanen verwendet werden, z. B. ein Hydrophobierungsmittel, welches von der Firma Graffex (Oberhausen) unter der Bezeichnung Top-Coat vermarktet wird.

Die Hydrophobierungsschicht kann durch Beschichtung der Schmelzschicht mit einem flüssigen Hydrophobierungsmittel, z. B. einer Lösung, einer Emulsion, einer Suspension oder dergleichen, hergestellt werden. Durch z. B. anschließende Trocknung wird die Hydrophobierungsschicht rückseitig auf der Schmelzschicht erzeugt. Dabei können wasserbasierende oder lösemittelbasierende Flüssigkeiten mit dem Hydrophobierungsmittel oder auch eine wässrige Emulsion zur Herstellung der Hydrophobierungsschicht verwendet werden. Die Hydrophobierungsschicht kann nachträglich auf die Kantenleiste, z. B. auf die Schmelzschicht aufgebracht werden. Alternativ besteht die Möglichkeit, die Hydrophobierungsschicht in-line während der Herstellung Kantenleiste aufzubringen.

Bei der Schmelzschicht, welche der Befestigung der Kantenleiste an der Möbelplatte dient, kann es sich um eine grundsätzlich bekannte Schmelzschicht bzw. Funktionalschicht handeln. Insbesondere kann es sich um eine Schmelzschicht handeln, die einen Schmelzklebstoff aufweist oder aus einem Schmelzklebstoff besteht. Bei der Schmelzschicht kann es sich folglich um eine Schmelzklebstoffschicht (Hotmelt) oder auch um eine schmelzkleblstoffartige Funktinalschicht handeln, z. B. basieren auf EVA, APAO, TPU, CoPA, PE, HDPE, PP, PO, TPE-Blockcopolymere (z. B. SBS, SEBS, SEPS). Solche schmelzklebstoffartigen Funktionalschichten mit Funktional- bzw. Schmelzschichten können weitere für die Schmelzverklebung geeignete Polymere und modifizierte Blends aus diesen Polymeren aufweisen. Außerdem können Additive vorgesehen sein, welche das Aufschmelzen mit bestimmten Strahlungsquellen optimieren sollen, z. B. Infrarot-Absorber für eine Laseraktivierbarkeit, insbesondere wenn Diodenlaser mit einer Wellenlänge von 800 nm bis 1100 nm verwendet werden. Ferner können diese Schmelzschichten Einfärbungen, UV-Schutz, Antioxidantien, Füllstoffe, Hydrokarbone, Wachse und Fließhilfen aufweisen. In der Regel wird die Schmelzschicht direkt im Zuge der Herstellung der Kantenleiste durch Coextrusion oder Post-Coextrusion mit der Deckschicht hergestellt. Alternativ kann die Schmelzschicht durch Nachbeschichtung auf die Deckschicht aufgebracht werden. Dabei kann auf bekannte Konzepte zurückgegriffen werden. Stets wird erfindungsgemäß rückseitig auf die Schmelzschicht die erfindungswesentliche Hydrophobierungsschicht aufgebracht.

Die Deckschicht kann aus herkömmlichem Material bestehen, z. B. aus ABS, PVC, PP oder PMMA. Sie kann eine Dicke von z. B. 0,4 mm bis 5 mm, z. B. 0,4 mm bis 3 mm aufweisen.

Die Schmelzschicht kann bevorzugt eine Dicke von 50 µm bis 1000 µm, z. B. 50 µm bis 500 µm, z. B. 100 µm bis 300 µm aufweisen.

Die Hydrophobierungsschicht ist vorzugsweise dünner als die Schmelzschicht. Sie weist eine Dicke ab 0,1 µm, z. B. 0,1 µm bis 100 µm, bevorzugt eine Dicke von 1 µm bis 50 µm, z. B. ein 1 µm bis 10 µm auf.

Bevorzugt wird eine Hydrophobierungsschicht verwendet, welche die Schmelzschicht vollständig und folglich vollflächig abdeckt. Alternativ liegt es jedoch auch im Rahmen der Erfindung, dass die Hydrophobierungsschicht die Schmelzschicht lediglich teilweise abdeckt, z. B. lediglich in den Randbereichen. So ist alternativ vorgesehen, lediglich die beiden Randbereiche mit der Hydrophobierungsschicht zu versehen, während der zentrale Bereich der Schmelzschicht über eine Breite von zumindest 50 % der Gesamtbreite der Kantenleiste unbeschichtet ist.

Die erfindungsgemäße Kantenleiste wird zum Befestigen an einer Möbelplatte oder dergleichen mit einer Wärmequelle und/oder Strahlungsquelle aufgeschmolzen, wobei die Hydrophobierungsschicht selbst nicht aufschmelzbar ist. Zum Aufschmelzen der Schmelzschicht können bevorzugt eine Laserstrahlungsquelle oder eine Plasmaquelle oder auch eine Heißluftquelle zum Einsatz kommen. Das Aufschmelzen der Schmelzschicht wird durch die Hydrophobierungsschicht nicht beeinträchtigt. So besteht z. B. beim Einsatz von Laserstrahlung die Möglichkeit, lediglich die Schmelzschicht mit einem Infrarot-Absorber zu versehen, so dass lediglich die Schmelzschicht erwärmt und folglich aufgeschmolzen wird, ohne dass die Hydrophobierungsschicht beeinträchtigt wird. Doch auch mit Plasmaquellen und Heißluftquellen besteht die Möglichkeit, lediglich die Schmelzschicht aufzuschmelzen.

Insgesamt gelingt aufgrund der erfindungswesentlichen Hydrophobierungsschicht eine verbesserte Abdichtung der Kantenleiste zu der Möbelplatte. Dieses ist insbesondere dann vorteilhaft, wenn die Möbelplatte mit Beschichtungen, z. B. Papieren beschichtet ist, insbesondere dann, wenn sehr dünne Beschichtungen verwendet werden. Bei geringsten Beschädigungen, z. B. durch die Formatierung und Befräsung, kann sonst grundsätzlich Feuchtigkeit eindringen. Durch die Hydrophobierung des Holzwerkstoffs im Bereich der Grenzflächen wird ein Eindringen der Feuchtigkeit trotz Beschädigungen vermieden bzw. Beschädigungen durch Eindringen von Feuchtigkeit werden verhindert. Dieses ist besonders dann vorteilhaft, wenn dünne Beschichtungen der Holzwerkstoffplatte mit einer Dicke von bis zu 200 µm verwendet werden, doch auch bei dickeren Beschichtungen ist die erfindungsgemäße Hydrophobierungsschicht vorteilhaft. Es erfolgt eine Verbesserung der Wasserbeständigkeit und Wasserdampfbeständigkeit.

Da die Hydrophobierungsschicht selbst keine Kunststoffschicht ist erfolgt eine geringere statische Aufladung, so dass eine deutlich reduzierte Verschmutzung der Rückseite der Kante zu beobachten ist. Außerdem lassen sich die Kantenbänder sehr gut handhaben. Es wird ein verbessertes Rollenhandling erreicht, welches dem Handling herkömmlicher Kantenbänder ohne Schmelzschicht entspricht. Ein reduzierter Reibungskoeffizient der rückseitigen Hydrophobierungsschicht sorgt darüber hinaus für eine bessere Maschinengängigkeit. Darüber hinaus hat der Verarbeiter den Vorteil, dass die Funktionsseite und folglich die Rückseite gegenüber herkömmlichen "Laserkanten" besser erkennbar ist, zumal die Hydrophobierungsschicht z. B. auch mit UV-Markern ausrüstbar ist.

Gegenstand der Erfindung ist nicht nur die erfindungsgemäße Kantenleiste, sondern auch ein Verfahren zum Befestigen einer solchen Kantenleiste an einem plattenförmigen Werkstück, z . B. einer Möbelplatte. Dieses Verfahren ist dadurch gekennzeichnet, dass die (innenliegende) Schmelzschicht mit einer Wärme- und/oder Strahlungsquelle aufgeschmolzen wird, während die (rückseitige) Hydrophobierungsschicht nicht aufgeschmolzen wird und dass die Kantenleiste gegen das Werkstück gedrückt und dabei die Hydrophobierungsschicht gegen und/oder in das Werkstück gepresst wird, z. B. in die Spanplatte bzw. Faserplatte. Bei einem solchen Verfahren kommt als Wärme- und/oder Strahlungsquelle insbesondere eine Laserquelle, eine Plasmaquelle und/oder einer Heißluftquelle zum Einsatz.

Im Folgenden wird die Erfindung anhand einer lediglich ein Ausführungsbeispiel darstellenden Zeichnung näher erläutert. Es zeigen:
**Fig. 1** eine erfindungsgemäße Kantenleiste im nicht montierten Zustand und
**Fig. 2** eine Möbelplatte mit Schmalflächenbeschichtung.

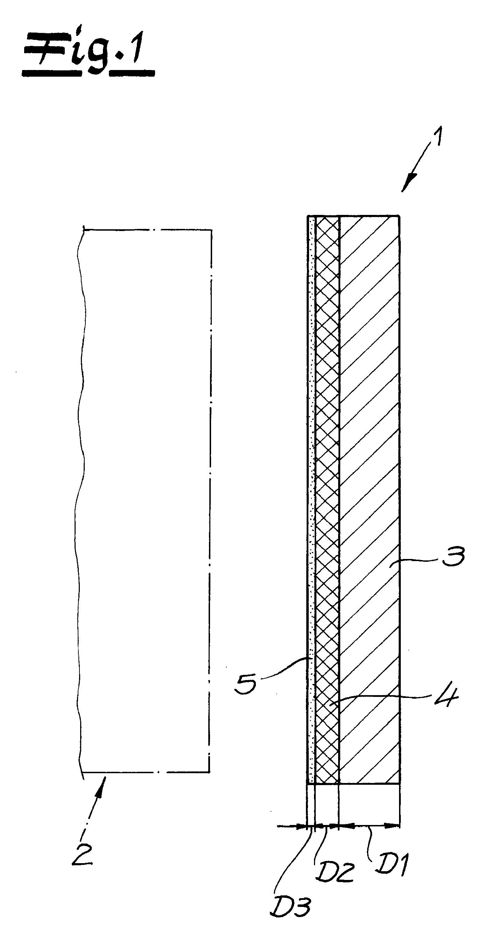

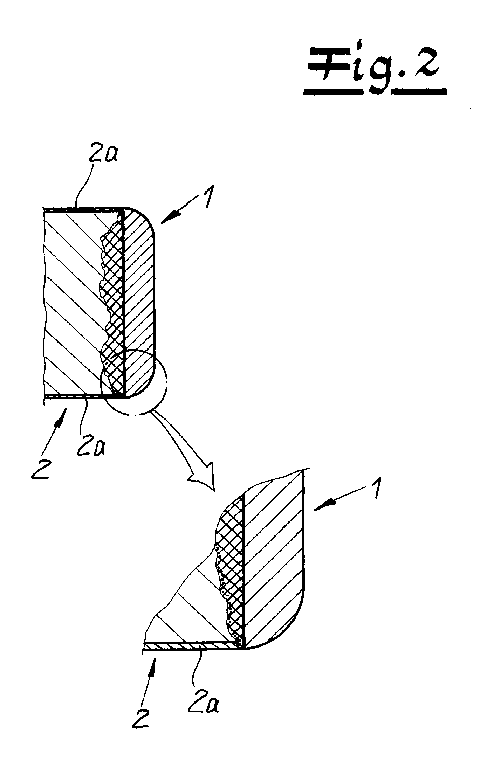

In den Figuren ist eine Kantenleiste 1 für die Schmalflächenbeschichtung einer Möbelplatte 2 dargestellt. Während Fig. 1 die Kantenleiste 1 im unmontierten Zustand bzw. vor der Befestigung an einer Möbelplatte zeigt, ist in Fig. 2 die Möbelplatte 2 mit der daran befestigten Kantenleiste 1 dargestellt, die nach der Befestigung nachgearbeitet wurde.

Die Kantenleiste 1 weist eine frontseitig Deckschicht 3 und eine Schmelzschicht 4 auf, welche zum Befestigen der Kantenleiste 1 an dem Werkstück 2 aufschmelzbar ist. Erfindungsgemäß ist auf der der Deckschicht 3 abgewandten Rückseite der Schmelzschicht 4 eine Hydrophobierungsschicht aus einem Hydrophobierungsmittel angeordnet. In dem dargestellten Ausführungsbeispiel deckt die Hydrophobierungsschicht 5 die Schmelzschicht 4 vollflächig ab. Die Deckschicht 3 ist in der Regel aus einem thermoplastischen Kunststoff, z. B. ABS, PP, PVC oder PMMA gefertigt. Sie weist eine Dicke D1 auf, die in der Regel 0,4 bis 5 mm beträgt. Rückseitig auf dieser Deckschicht 3 ist die Schmelzschicht 4 angeordnet, welche eine Dicke D2 von z. B. 50 µm bis 500 µm aufweist. Rückseitig auf dieser Schmelzschicht 4 ist nun erfindungsgemäß die Hydrophobierungsschicht 5 angeordnet, welche eine Dicke D3 von 0,1 µm bis 100 µm, vorzugsweise 1 µm bis 10 µm aufweist.

Um die in Fig. 1 dargestellte Kantenleiste 1 an der Schmalfläche einer Möbelplatte 2 zu befestigen, wird die Schmelzschicht 4 mit einer geeigneten Wärme- und/oder Strahlungsquelle aufgeschmolzen. Dabei kann es sich z. B. um eine Laserstrahlungsquelle, z. B. einen Infrarotlaser (bevorzugt einen Diodenlaser) handeln. Die Schmelzschicht 4 ist in diesem Fall bevorzugt mit einem Infrarot-Absorber versehen, so dass lediglich die Schmelzschicht 4 aufgeschmolzen wird.

Die Kantenleiste 1 lässt sich dann mit der aufgeschmolzenen Schmelzschicht 4 an die Schmalfläche der Möbelplatte 2 pressen und auf diese Weise an der Schmalfläche befestigen. Fig. 2 zeigt die Möbelplatte 2 mit der auf diese Weise befestigten Kantenleiste 1. Es ist erkennbar, dass die rückseitig an der Kantenleiste angeordnet Hydrophobierungsschicht 5 im Zuge der Befestigung von der Schmelzschicht 4 gegen bzw. in die Möbelplatte gedrückt wird. Dabei ist erkennbar, dass die Möbelplatte 2 mit Dekorbeschichtungen 2a versehen ist, die z. B. von harzgetränkten Papieren 2a gebildet werden. Das Hydrophobierungsmittel versiegelt gleichsam die Möbelplatte, so dass eine deutlich verbesserte Wasserfestigkeit bzw. Wasserdampffestigkeit realisiert wird. Überraschenderweise wird die Funktion der Schmelzschicht 4 durch die Hydrophobierungsschicht 5 nicht maßgeblich beeinträchtigt, auch wenn folglich nicht die rückseitige Oberfläche der Kantenleiste aufgeschmolzen wird, sondern lediglich eine innenliegende Schmelzschicht.

## Patentansprüche

1. Kantenleiste (1) für die Schmalflächenbeschichtung von plattenförmigen Werkstücken, insbesondere von Möbelplatten (2), mit zumindest einer frontseitigen Deckschicht (3) und einer Schmelzschicht (4), welche zum Befestigen der Kantenleiste (1) an dem Werkstück aufschmelzbar ist, **dadurch gekennzeichnet,**
**dass** auf der der Deckschicht (3) abgewandten Rückseite der Schmelzschicht (4) eine Hydrophobierungsschicht (5) aus bzw. mit einem Hydrophobierungsmittel angeordnet ist.

2. Kantenleiste nach Anspruch 1, **dadurch gekennzeichnet, dass** die Hydrophobierungsschicht (5) als Hydrophobierungsmittel zumindest ein Polysiloxan, ein Silan und/oder ein Isoalkan aufweist.

3. Kantenleiste nach Anspruch 1 oder 2, **dadurch gekennzeichnet, dass** die Hydrophobierungsschicht (5) die Schmelzschicht (4) vollflächig abdeckt.

4. Kantenleiste nach Anspruch 1 oder 2, **dadurch gekennzeichnet, dass** die Hydrophobierungsschicht (5) die Schmelzschicht (4) lediglich teilweise abdeckt, z. B. lediglich in den Randbereichen.

5. Kantenleiste nach einem der Ansprüche 1 bis 4, **dadurch gekennzeichnet, dass** die Schmelzschicht (4) mit einer Wärme- und/oder Strahlungsquelle aufschmelzbar und die Hydrophobierungsschicht (5) nicht aufschmelzbar ist.

6. Kantenleiste nach einem der Ansprüche 1 bis 5, **dadurch gekennzeichnet, dass** die Schmelzschicht (4) eine Dicke von 50 µm bis 1000 µm, vorzugsweise 50 µm bis 500 µm, z. B. 100 µm bis 400 µm aufweist.

7. Kantenleiste nach einem der Ansprüche 1 bis 6, **dadurch gekennzeichnet, dass** die Hydrophobierungsschicht (5) eine Dicke von 0,1 µm bis 100 µm, vorzugsweise 1 µm bis 50 µm, z. B. 1 µm bis 10 µm aufweist.

8. Kantenleiste nach einem der Ansprüche 1 bis 7, **dadurch gekennzeichnet, dass** lediglich die Schmelzschicht mit Infrarot-Absorbern versehen ist.

9. Kantenleiste nach einem der Ansprüche 1 bis 8, **dadurch gekennzeichnet, dass** die Schmelzschicht eine Schmelzklebstoffschicht oder eine schmelzklebstoffartige Schicht ist, die zumindest einen Schmelzklebstoff (Hotmelt) aufweist.

10. Kantenleiste nach einem der Ansprüche 1 bis 9, **dadurch gekennzeichnet, dass** das die Hydrophobierungsschicht (5) aus einem flüssigen Hydrophobierungsmittel hergestellt wird, welches auf der Schmelzschicht getrocknet ist.

11. Verfahren zum Befestigen einer Kantenleiste nach einem der Ansprüche 1 bis 10 auf einen plattenförmigen Werkstück, insbesondere auf einer Möbelplatte, wobei
die innenliegende Schmelzschicht mit einer Wärme- und/oder Strahlungsquelle aufgeschmolzen wird, während die die rückseitige Oberfläche bildende Hydrophobierungsschicht nicht aufgeschmolzen wird und wobei
die Kantenleiste gegen das Werkstück gedrückt und dabei die Hydrophobierungsschicht gegen und/oder in das Werkstück gepresst wird.

12. Verfahren nach Anspruch 11, **dadurch gekennzeichnet, dass** die Schmelzschicht mit einer Laserstrahlungsquelle, Plasmaquelle und/oder Heißluftquelle aufgeschmolzen wird.

## Claims

1. Edge strip (1) for the narrow surface coating of plate-shaped workpieces, particularly of furniture boards (2), with at least one front cover layer (3) and one melting layer (4) that can be melted for fixing the edge strip (1) on the workpiece,
**characterized in that**
a hydrophobizing layer (5) made of or with a liquid hydrophobizing agent is arranged on the rear side of the melting layer (4) facing away from the cover layer (3).

2. Edge strip according to claim 1, **characterized in that** the hydrophobizing layer (5) comprises at least one polysiloxane, silane and/or isoalkane as the hydrophobizing agent.

3. Edge strip according to either of claims 1 or 2, **characterized in that** the hydrophobizing layer (5) covers the entire surface of the melting layer (4).

4. Edge strip according to either of claims 1 or 2, **characterized in that** the hydrophobizing layer (5) only partially covers the melting layer (4), for example only the edge regions.

5. Edge strip according to any one of claims 1 to 4, **characterized in that** the melting layer (4) is meltable with a heat and/or radiation source, and the hydrophobizing layer (5) is not meltable.

6. Edge strip according to any one of claims 1 to 5, **characterized in that** the melting layer (4) has a thickness from 50 µm to 1000 µm, preferably 50 µm to 500 µm, for example, 100 µm to 400 µm.

7. Edge strip according to any one of claims 1 to 6, **characterized in that** the hydrophobizing layer (5) has a thickness of 0.1 µm to 100 µm, preferably 1 µm to 50 µm, for example 1 µm to 10 µm.

8. Edge strip according to any one of claims 1 to 7, **characterized in that** only the melting layer is furnished with infra-red absorbers.

9. Edge strip according to any one of claims 1 to 8, **characterized in that** the melting layer is a hot melt adhesive layer or a hot melt adhesive-like layer comprising at least one hot-melt adhesive.

10. Edge strip according to any one of claims 1 to 9, **characterized in that** the hydrophobizing layer (5) is prepared from a liquid hydrophobizing agent, which is dried on the melting layer.

11. Method for fixing an edge strip according to any one of claims 1 to 10 to a plate-shaped workpiece, particularly a furniture board, wherein
the inner melting layer is melted with heat and/or radiation source, while the hydrophobizing layer forming the rear surface is not melted, and wherein
the edge strip is pressed against the workpiece while the hydrophobizing layer is pressed against and/or into the workpiece.

12. Method according to claim 11, **characterized in that** the melting layer is melted with a laser radiation source, a plasma source and/or a hot air source.

## Revendications

1. Baguette de lisière (1) pour le revêtement de surfaces étroites de pièces d'oeuvre en forme de panneaux, notamment de panneaux de meubles (2), avec au moins un couche de recouvrement (3) côté frontal et une couche fusible (4) qui pour la fixation de la baguette de lisière (1) est fusible sur la pièce d'oeuvre,
**caractérisée en ce que**
sur la face arrière de la couche fusible (4) qui est opposée à la couche de recouvrement (3) est placée une couche hydrophobe (5) en ou avec un produit d'imperméabilisation.

2. Baguette de lisière selon la revendication 1, **caractérisée en ce que** la couche hydrophobe (5) comporte en tant que produit d'imperméabilisation au moins un polysiloxane, un silane et/ou un isoalcane.

3. Baguette de lisière selon la revendication 1 ou la revendication 2, **caractérisée en ce que** la couche hydrophobe (5) recouvre à pleine surface la couche fusible (4).

4. Baguette de lisière selon la revendication 1 ou la revendication 2, **caractérisée en ce que** la couche hydrophobe (5) ne recouvre la couche fusible (4) qu'en partie, par ex. seulement dans les zones de bordure.

5. Baguette de lisière selon l'une quelconque des revendications 1 à 4, **caractérisée en ce que** la couche fusible (4) est fusible à l'aide d'une source de chaleur et/ou de rayonnement et **en ce que** la couche hydrophobe (5) n'est pas fusible.

6. Baguette de lisière selon l'une quelconque des revendications 1 à 5, **caractérisée en ce que** la couche fusible (4) présente une épaisseur de 50 µm à 1000 µm, de préférence de 50 µm à 500 µm, par ex. de 100 µm à 400 µm.

7. Baguette de lisière selon l'une quelconque des revendications 1 à 6, **caractérisée en ce que** la couche hydrophobe (5) présente une épaisseur de 0,1 µm à 100 µm, de préférence de 1 µm à 50 µm, par ex. de 1 µm à 10 µm.

8. Baguette de lisière selon l'une quelconque des revendications 1 à 7, **caractérisée en ce que** seulement la couche fusible est munie d'absorbeurs d'infrarouges.

9. Baguette de lisière selon l'une quelconque des revendications 1 à 8, **caractérisée en ce que** la couche fusible comporte une couche d'agent adhésif fusible ou une couche du type d'un agent adhésif fusible, qui comporte au moins un agent adhésif fusible (thermofusible).

10. Baguette de lisière selon l'une quelconque des revendications 1 à 9, **caractérisée en ce qu'**on fabrique la couche hydrophobe (5) à partir d'un produit d'imperméabilisation liquide que l'on fait sécher sur la couche fusible.

11. Procédé destiné à fixer une baguette de lisière selon l'une quelconque des revendications 1 à 10 sur une pièce d'oeuvre en forme de panneau, notamment sur un panneau de meuble,
lors duquel on fait fondre la couche fusible à l'aide d'une source de chaleur et/ou de rayonnement, alors qu'on ne fait pas fondre la couche hydrophobe formant la surface arrière et
lors duquel on pousse la baguette de lisière contre la pièce d'oeuvre et on presse à cet effet la couche hydrophobe contre et/ou dans la pièce d'oeuvre.

12. Procédé selon la revendication 11, **caractérisé en ce qu'**on fait fondre la couche fusible à l'aide d'une source de rayonnement laser, d'une source plasma et/ou d'une source d'air chaud.
